# EUROPÄISCHE PATENTSCHRIFT

(11) **EP 3 504 253 B1**
(45) Veröffentlichungstag und Bekanntmachung des Hinweises auf die Patenterteilung: **04.05.2022**
(21) Anmeldenummer: 17754361.8
(22) Anmeldetag: 21.08.2017
(51) Int. Cl.: C08G 18/48, C08G 18/50, C08G 18/76, C08G 18/32, C08G 18/36, C09J 175/04, C08G 18/66, C08F 283/00, C08G 18/08, C09J 175/08, C08F 283/06, C09J 151/08

(54) **POLYURETHANMATERIAL MIT HOHER TEMPERATURBESTÄNDIGKEIT**
POLYURETHANE MATERIAL WITH HIGH TEMPERATURE RESISTANCE
MATERIAU POLYURETHANE AYANT UNE HAUTE RESISTANCE A LA TEMPERATURE

(30) Priorität: 25.08.2016 EP 16185702
(43) Veröffentlichungstag der Anmeldung: 03.07.2019
(73) Patentinhaber: BASF SE, 67056 Ludwigshafen am Rhein (DE)
(72) Erfinder: MEYER, Andre, 49448 Lemboerde (DE); EMGE, Andreas, 49448 Lemfoerde (DE)
(74) Vertreter: BASF IP Association
(86) Internationale Anmeldenummer: PCT/EP2017/070986
(87) Internationale Veröffentlichungsnummer: WO 2018/036943

(56) Entgegenhaltungen:
- DE-A1-102008 002 008

## Beschreibung

Die vorliegende Erfindung betrifft Verfahren zur Herstellung eines Polyurethanmaterials, bei dem man (a) Di- und/oder Polyisocyanate, (b) Verbindungen mit gegenüber Isocyanatgruppen reaktiven Wasserstoffatomen, (c) Verbindungen, enthaltend mindestens eine Kohlenstoff-Kohlenstoff-Doppelbindung, (d) gegebenenfalls die Urethanreaktion beschleunigender Katalysator, (e) gegebenenfalls Radikalstarter und (f) gegebenenfalls weitere Hilfs- und Zusatzstoffe zu einer Reaktionsmischung vermischt und aushärtet, wobei als Verbindungen mit gegenüber Isocyanat reaktiven Wasserstoffatomen Verbindungen eingesetzt werden, die eine mittlere Funktionalität von mindestens 1,5 aufweisen, die Doppelbindungsdichte der Verbindung (c) mindestens 21 % beträgt und und die Doppelbindungsfunktionalität der Verbindung (c) größer als 1 ist und die Verbindung (c) keine gegenüber Isocyanat reaktive Gruppen aufweist und neben Verbindungen der Komponente (b) keine weiteren Verbindungen mit gegenüber Isocyanat reaktiven Wasserstoffatomen eingesetzt werden und das Aquivalenzverhältnis von Isocyanatgruppen der Di- und/oder Polyisocyanate (a) und der gegenüber Isocyanat reaktiven Wasserstoffatome der Verbindungen (b) 0,8 bis 2 beträgt. Weiter betrifft die vorliegende Erfindung ein Polyurethanmaterial, erhältlich nach einem erfindungsgemäßen Verfahren sowie die Verwendung des Polyurethanmaterials, insbesondere eines Polyurethan-Faserverbundmaterials als strukturelle Bauteile.

Polyurethanmaterialien sind vielfach einsetzbar, zeichnen sich aber häufig durch verbesserungswürdige Gebrauchseigenschaften bei hohen Temperaturen aus. Polyurethqan-Faserverbundmaterialien sind bekannt und werden üblicherweise durch Pultrusion, Faser-Wickelverfahren oder Imprägnierverfahren, wie Vakuuminfusion, erhalten. Die so erhaltenen Faserverbundmaterialien zeichnen sich durch ein relativ geringes Materialgewicht bei hoher Härte und Steifigkeit, einer hohen Korrosionsbeständigkeit und einer guten Verarbeitbarkeit aus. Polyurethan-Faserverbundmaterialien werden beispielsweise als Karrosserieaußenteile im Fahrzeugbau, als Bootsrümpfe, Masten, beispielsweise als Strommasten oder Telegraphenmasten, oder Rotorblätter für Windkraftanlagen eingesetzt.

Verbesserungsfähig ist der Erhalt der guten Materialeigenschaften bei höheren Temperaturen.

Dazu wird versucht, die Glastemperatur des Polyurethan-Faserverbundmaterials zu erhöhen. Auch für das Lackierverfahren in der Automobilindutrie, das kathodische Tauchlackierverfahren werden Materialien mit einer hohen Temperaturbeständigkeit benötigt.

In US 4162357 wird ein Verfahren zur Herstellung von hitzeresistenten sythetischen Harzen, wobei Polyisocyanate mit einem Trimerisierungskatalysator und mindestens einem aus einem polymerisierbaren, ungesättigten Monomer, organischen Epoxiden und 0,05 bis 0.5 äquivalenten, bezogen auf die Isocyanatgruppen von Verbindungen mit gegenüber Isocyanaten reaktiven Wasserstoffatomen.

WO 2008/119973, WO 2015155195 und WO2016087366 beschreiben die Umsetzung von höherfunktionellen Polyisocyanaten mit Verbindungen, die mit einer Hydroxylgruppe eine gegenüber Isocyanat reaktive Gruppe und mindestens eine endständige Doppelbindung enthalten. Dabei werden die Isocyanate mit dieser Verbindung zu einer viskosen Flüssigkeit umgesetzt, welche anschließend durch Polymerisation der Doppelbindung, ggf. in Gegenwart weiterer Doppelbindungen enthaltender Verbindungen wie Styrol, zum festen Harz polymerisiert werden. Nachteilig an den Verfahren des Stands der Technik ist, dass ein aufwendiges, zweistufiges Herstellungsverfahren nötig ist und insbesondere die Verbindungen, die sowohl Doppelbindungen als auch gegenüber Isocyanat reaktive Gruppen aufweisen großtechnisch weniger üblich und relativ teuer sind. Weiter werden aufgrund des Monoolcharakters durch die Isocyanat-Monoolreaktion keine großen Molekulargewichte aufgebaut und auch keine vernetzten Polyurethane erhalten, was sich in schlechteren mechanischen Eigenschaften der erhaltenen Produkte zeigt.

Aufgabe der vorliegenden Erfindung war es, ein einfaches Verfahren zur Verbesserung der mechanischen Eigenschaften von Polyurethan bei hohen Temperaturen zu liefern und somit Polyurethane zugänglich zu machen, die beispielsweise im kathodischen Tauchlackierverfahren eingesetzt werden können.

Gegenstand der vorliegenden Erfindung ist ein Verfahren zur Herstellung eines Polyurethanmaterials, bei dem man (a) Di- und/oder Polyisocyanate, (b) Verbindungen mit gegenüber Isocyanatgruppen reaktiven Wasserstoffatomen, (c) Verbindungen, enthaltend mindestens eine Kohlenstoff-Kohlenstoff-Doppelbindung, (d) gegebenenfalls die Urethanreaktion beschleunigender Katalysator, (e) gegebenenfalls Radikalstarter und (f) gegebenenfalls weitere Hilfs- und Zusatzstoffe zu einer Reaktionsmischung vermischt und aushärtet, wobei als Verbindungen mit gegenüber Isocyanat reaktiven Wasserstoffatomen Verbindungen eingesetzt werden, die eine mittlere Funktionalität von mindestens 1,5 aufweisen, die Doppelbindungsdichte der Verbindung (c) mindestens 21 % beträgt und die Doppelbindungsfunktionalität der Verbindung (c) größer als 1 ist und die Verbindung (c) keine gegenüber Isocyanat reaktive Gruppen aufweist und neben Verbindungen der Komponente (b) keine weiteren Verbindungen mit gegenüber Isocyanat reaktiven Wasserstoffatomen eingesetzt werden und das Aquivalenzverhältnis von Isocyanatgruppen der Di- und/oder Polyisocyanate (a) und der gegenüber Isocyanat reaktiven Wasserstoffatome der Verbindungen (b) 0,8 bis 2 beträgt.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, insbesondere Polyurethanhartschaumstoffe, sowie Polyurethanbeschichtungen.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan ohne Zugabe eines Treibmittels erhalten. Geringe Mengen an Treibmittel, beispielsweise Wasser, das herstellungsbedingt in den Polyolen enthalten ist, ist dabei im Rahmen der vorliegenden Erfindung nicht als Treibmittelzugabe zu verstehen. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser. Vorzugsweise enthält das massive Polyurethan Füllstoffe, insbesondere Faserförmige Füllstoffe. Geeignete Füllstoffe sind unter (e) beschrieben.

Als Di- oder Polyisocyanate (a) können alle zur Herstellung von Polyurethanen bekannten aliphatischen, cycloaliphatischen oder aromatischen Isocyanaten sowie beliebige Mischungen daraus, eingesetzt werden. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden als Di- oder Polyisocyanate (a) Isocyanate auf Basis des Diphenylmethandiisocyanats, beispielsweise 2,4'-MDI, 4,4'-MDI, höherkernige Homologe des MDI oder Mischungen aus mindestens zwei dieser Komponenten eingesetzt, insbesondere polymer-MDI. Vorzugsweise weist das Di- und Polyisocyanate (a) eine Funktionalität von 2,0 bis 2,9, besonders bevorzugt 2,1 bis 2,8 auf. Die Viskosität der Di- oder Polyisocyanate (a) bei 25 °C nach DIN 53019-1 bis 3 liegt dabei vorzugsweise zwischen 5 und 600 mPas und besonders bevorzugt zwischen 10 und 300 mPas.

Di- und Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Verbindungen mit mindestens zwei gegenüber Isocyanaten reaktiven Gruppen (Bestandteil (a-2)), zum Prepolymer umgesetzt werden. Der NCO-Gehalt erfindungsgemäßer Polyisocyanatprepolymere beträgt vorzugsweise von 20 bis 33 Gew.-% NCO, besonders bevorzugt von 25 bis 32 Gew.-% NCO.

Verbindungen mit mindestens zwei gegenüber Isocyanaten reaktiven Gruppen (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Verbindungen mit mindestens zwei gegenüber Isocyanaten reaktiven Gruppen Polyether- oder Polyesterole, wie die nachfolgend unter (b) beschriebenen, eingesetzt werden. Vorzugsweise werden als Verbindungen mit mindestens zwei gegenüber Isocyanaten reaktiven Gruppen (a-2) Polyether- oder Polyesterole, enthaltend sekundäre OH-Gruppen, eingesetzt, wie beispielsweise Polypropylenoxyd. Die Polyether- oder Polyesterole, besitzen dabei vorzugsweise eine Funktionalität von 2 bis 4, besonders bevorzugt von 2 bis 3 und einen Anteil an sekundären OH-Gruppen von mindestens 50 %, vorzugsweise mindestens 75 % und insbesondere mindestens 85 %.

Als Verbindungen mit im Mittel mindestens 1,5 gegenüber Isocyanatgruppen reaktiven Wasserstoffatomen pro Molekül (b) können alle in der Polyurethanchemie bekannten Verbindungen mit gegenüber Isocyanaten reaktiven Wasserstoffatomen eingesetzt werden. Diese weisen eine mittlere Funktionalität von mindestens 1,5, vorzugsweise 1,7 bis 8, besonders bevorzugt 1,9 bis 6 und insbesondere 2 bis 4 auf. Diese umfassen Kettenverlängerer und Vernetzungsmittel mit einer OH-Funktionalität von 2 bis 6, und einem Molekulargewicht von kleiner als 300 g/mol, vorzugsweise einer Funktionalität von 2 bis 4 und besonders bevorzugt von 2 bis 3 sowie polymere Verbindungen mit gegenüber Isocyanat reaktiven Wasserstoffatomen und einem Molekulargewicht von 300 g/mol und größer.

Als Kettenverlängerer werden dabei Moleküle mit zwei gegenüber Isocyanat reaktiven Wasserstoffatomen bezeichnet und Moleküle mit mehr als zwei gegenüber Isocyanat reaktiven Wasserstoffen werden als Vernetzer bezeichnet. Diese können einzeln oder bevorzugt in Form von Mischungen eingesetzt werden. Vorzugsweise werden Diamine, Diole und/oder Triole mit Molekulargewichten kleiner als 300 g/mol, besonders bevorzugt von 62 g/mol bis kleiner 300 g/mol und insbesondere von 62 g/mol bis 250 g/mol eingesetzt. In Betracht kommen beispielsweise aliphatische, cycloaliphatische und/oder araliphatische oder aromatische Diamine und Diole mit 2 bis 14, vorzugsweise 2 bis 10 Kohlenstoffatomen, wie Diethyltoluoldiamine (DEDTA), m-Phenylendiamine, Ethylenglykol, 1,2-Propandiol, 2-Methyl-1,3-Propandiol, 1,3-propandiol, 1,4-Butandiol, 1,6-Hexandiol, 1,10-Decandiol und Bis-(2-hydroxyethyl)-hydrochinon (HQEE), 1,2-, 1,3-, 1,4-Dihydroxycyclohexan, Bisphenol-A-bis(hydroxyethylether), Diethylenglykol, Dipropylenglykol, Tripropylenglykol, Triole, wie 1,2,4-, 1,3,5-Trihydroxycyclohexan, Glycerin und Trimethylolpropan, Diethanolamine, Triethanolamine, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Vernetzer niedermolekulare hydroxylgruppenhaltige Polyalkylenoxide auf Basis von Ethylen- und/oder 1,2-Propylenoxid, besonders bevorzugt von 1,2 Propylen, und trifunktionellen Startern, insbesondere Glycerin und Trimethylolpropan, eingesetzt. Besonders bevorzugte Kettenverlängerer sind Ethylenglykol, 1,2-Propandiol, 1,3-Propandiol, 2-Methyl-1,3-Propandiol, 1,4-Butadiol, Diethylenglykol, Bis-(2-hydroxyethyl)-hydrochinon und Dipropylenglykol.

Wird Kettenverlängerer und/oder Vernetzer eingesetzt, beträgt der Anteil der Kettenverlängerer und/ oder Vernetzer (e) üblicherweise 1 bis 50, vorzugsweise 2 bis 20 Gew.-%, bezogen auf das Gesamtgewicht der Komponenten (a) bis (e).

Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Polymere Verbindungen mit gegenüber Isocyanat reaktiven Wasserstoffatomen weisen vorzugsweise ein zahlenmittleres Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Vorzugsweise enthalten die polymeren Verbindungen mit gegenüber Isocyanaten reaktiven Wasserstoffatomen Verbindungen mit hydrophoben Gruppen. Besonders bevorzugt handelt es sich dabei um hydroxylfunktionalisierte Verbindungen mit hydrophoben Gruppen. Solche hydrophoben Gruppen haben Kohlenwasserstoffgruppen mit vorzugsweise mehr als 6, besonders bevorzugt mehr als 8 und weniger als 100 und insbesondere mehr als 10 und weniger als 50 Kohlenstoffatomen.

Als hydroxylfunktionalisierte hydrophobe Verbindung wird vorzugsweise eine hydroxylfunktionalisierte fettchemische Verbindung, ein fettchemisches Polyol, eingesetzt. Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch

Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Cognis und Altropol angeboten.

Als Verbindungen (c), enthaltend mindestens eine Kohlenstoff-Kohlenstoff-Doppelbindung, vorzugsweise mindestens eine endständige Kohlenstoff-Kohlenstoff-Doppelbindung, können beispielsweise Verbindungen eingesetzt werden, die eine oder mehrere Vinylgruppen enthalten. Dabei ist es erfindungswesentlich, dass die Doppelbindungsdichte der Doppelbindungen (d. H. der Vinylgruppen R-CH=CH₂) der Verbindungen der Komponente (c) jeweils mindestens 21%, bevorzugt mindestens 23% und besonders bevorzugt mindestens 25% beträgt. Dabei wird im Rahmen der vorliegenden Erfindung unter einer Doppelbindungsdichte einer Verbindung der Massenanteil der endständigen Doppelbindungen in das Verhältnis zur gesamten Molekülmasse gesetzt. Für eine endständige Doppelbindung wird dabei eine Masse von 27 g/mol angenommen ( -CH=CH₂; 2 mal Kohlenstoff plus 3 mal Wasserstoff).

Dabei enthalten die Verbindungen (c) keine gegenüber Isocyanat reaktive Wasserstoffatome.. Typische Verbindungen (c) sind beispielsweise Butadien, Isopren, 1,3-Pentadien, 1,5-Hexadien, 1,7-Octadien, Vinylacrylate, Vinylmethacrylat, Methoxybutadien, Dipropylenglycoldiacrylat, Trimethylolpropantriacrylat, Polybutadien. Dabei ist die Doppelbindungsfunktionalität der Verbindung (c) größer als 1, beispielsweise 2 oder 3. Werden mehrere Verbindungen (c) eingesetzt, ergibt sich die Doppelbindungsdichte aus dem Zahlenmittel der eingesetzten Komponenten. Bevorzugtes ethylenisch ungesättigte Monomere ist Trimethylolpropantriacrylat.

Vorzugsweise beträgt der Anteil der Verbindungen, enthaltend mindestens eine Kohlenstoff-Kohlenstoff-Doppelbindung (c), 10 bis 70 Gew.-%, besonders bevorzugt 25 bis 60 Gew.-% und insbesondere 30 bis 50 Gew.-%, jeweils bezogen auf das Gesamtgewicht der Komponenten (a) bis (f).

Als Katalysatoren (d) können übliche Polyurethankatalysatoren eingesetzt werden. Diese beschleunigen die Reaktion der Verbindungen mit gegenüber Isocyanaten reaktiven Wasserstoffatome (b) mit den Di- und Polyisocyanaten (a) stark. Als übliche Katalysatoren, die zur Herstellung der Polyurethane eingesetzt werden können, seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin, genannt. Ebenso kommen organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Katalysatoren (d) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b), eingesetzt werden.

Die Doppelbindungen der Komponente (c) können während der Polyurethanreaktion der Komponenten (a) und (b) oder in einem an die Polyurethanreaktion anschließenden Schritt radikalisch polymerisiert werden. Die Vernetzung der Doppelbindungen des erfindungsgemäßen Polyurethanmaterials kann dabei durch übliche Radikalstarter (e), wie Peroxide oder AIBN, erfolgen. Weiter kann eine Vernetzung auch durch Bestrahlung mit energiereicher Strahlung, beispielsweise UV-Licht, Elektronenstrahlen oder β- oder γ-Strahlung, erfolgen. Eine weitere Vernetzungsmöglichkeit ist die thermische Vernetzung bei Temperaturen von größer 150 °C, vorzugsweise größer 180 °C, in Gegenwart von Sauerstoff. Vorzugsweise erfolgt die Vernetzung der Doppelbindungen durch übliche Radikalstarter oder durch Bestrahlung mit energiereicher Strahlung, besonders bevorzugt durch übliche Radikalstarter.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Treibmittel, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Dagegen sind Epoxidgruppen enthaltende Verbindungen zur Herstellung der erfindungsgemäßen Polyurethanmaterialien nicht erforderlich. Vorzugsweise enthält das erfindungsgemäße Polyurethanmaterial im Wesentlichen keine Epoxidgruppen enthaltende Verbindungen. Da bedeutet, dass der Anteil von Epoxidgruppen enthaltenden Verbindungen, bezogen auf das Gesamtgewicht der Komponenten (a) bis (f) kleiner als 1 Gew.-%, besonders bevorzugt kleiner 0,1 Gew.-% ist.

Im Allgemeinen werden bei der Herstellung des erfindungsgemäßen Polyurethanmaterials die Di und/oder Polyisocyanate (a), die Verbindungen mit gegenüber Isocyanatgruppen reaktiven Wasserstoffatomen (b) und, falls eingesetzt, weiteren Verbindungen mit gegenüber Isocyanat reaktiven Wasserstoffatomen, wie beispielsweise Treibmittel, in solchen Mengen zur Umsetzung gebracht, dass das Äquivalenz-Verhältnis von NCO-Gruppen der Polyisocyanate (a) zur Summe der gegenüber Isocyanatgruppen reaktiven Wasserstoffatome der weiteren Komponenten 0,8 bis 2, vorzugsweise 0,9 bis 1,2 und besonders bevorzugt 0,95 bis 1,1 beträgt. Ein Verhältnis von 1:1 entspricht dabei einem Isocyanatindex von 100.

In einer bevorzugten Ausführungsform wird das erfindungsgemäße, ausgehärtete Polyurethanmaterial in einem Schritt erhalten. Dabei bedeutet "in einem Schritt", dass alle Komponenten zur Herstellung des Formkörpers (a) bis (c) und, falls vorhanden (d) bis (f) vor Beginn der Reaktion vermischt werden und die Reaktion anschließend bis zum Erhalt eines ausgehärteten Polyurethanmaterials ohne die Zugabe von weiteren Verbindungen und insbesondere ohne Zugabe von weiteren Verbindungen, die gegenüber Isocyanatgruppen reaktiven Gruppen enthalten, erfolgt.

Dabei ist das erfindungsgemäße ausgehärtete Polyurethanmaterial ein Feststoff. Im Rahmen der vorliegenden Erfindung handelt es sich im um einen Feststoff wenn die shore-Härter gemäß DIN EN ISO 868 größer ist als 10 shore A, bevorzugt größer als 30 shore A und insbesondere größer ist als 50 shore A. In einer weiteren bevorzugten Ausführungsform weist das erfindungsgemäße ausgehärtete Polyurethanmaterial eine hohe Kerbschlagzähigkeit nach DIN EN ISO 179-1 gemäß Charpy von vorzugsweise größer als 10 kJ/m², besonders bevorzugt größer 20 kJ/m² und insbesondere größer als 30 kJ/m² auf. Das Vorliegen eines erfindungsgemäßen, ausgehärteten Polyurethanmaterials soll dabei unabhängig von der Vernetzungsreaktion der Doppelbindungen der Komponente (c) sein, das heißt sobald die shore-Härte erreicht ist, ist die Definition des ausgehärteten Polyurethanmaterials erreicht, unabhängig davon, ob bereits alle Doppelbindungen, ein Teil der Doppelbindungen oder keine Doppelbindungen miteinander reagiert haben. Üblicherweise erhöht sich die Härte weiter, wenn die Vernetzungsreaktion der Doppelbindung erfolgt ist.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Hartschaumstoff oder ein Duromer hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094 und die Edukte für die Herstellung eines Hartschaumstoffs in PCT/EP2005/010955. Zu den in diesen Dokumenten beschriebenen Edukten wird dann jeweils noch die Verbindung (c) zugegeben.

Neben dem erfindungsgemäßen Verfahren ist auch ein Polyurethan, erhältlich nach einem erfindungsgemäßen Verfahren Gegenstand der Erfindung.

In einer bevorzugten Ausführungsform der vorliegenden Erfindung ist das erfindungsgemäße Polyurethanmaterial ein Polyurethan-Faserverbundmaterial. Zu dessen Herstellung werden Fasern mit der Reaktionsmischung benetzt und anschließend zum Polyurethan-Faserverbundmaterial ausgehärtet. Als Fasern werden vorzugsweise Glasfasern, Carbonfasern, Polyesterfasern, Naturfasern, wie Cellulosefasern, Aramidfasern, Nylonfasern, Basaltfasern, Borfasern, Zylonfasern (Poly(p-phenylen-2,6-benzobisoxazol), Siliciumcarbidfasern, Asbestfasern, Metallfasern und Kombinationen davon. Techniken zum Benetzen der Fasern sind nicht beschränkt und allgemein bekannt. Diese umfassen beispielsweise das Faser-Wickelverfahren, das Pultrusionsverfahren, das Handlaminierverfahren und das Infusionsverfahren wie das Vakuuminfusionsverfahren.

Die erfindungsgemäßen Polyurethanmaterialien, insbesondere die erfindungsgemäßen Polyurethanfaserverbundmaterialien, zeigen eine verbesserte Wärmeformbeständigkeit, eine erhöhte Glastemperatur, sehr gute Beständigkeit gegenüber Wasser und hydrophoben Flüssigkeiten und sehr gute Dauerbelastungseigenschaften.

Beispielsweise können erfindungsgemäße Polyurethan-Faserverbundmaterialien beispielsweise als Klebstoffe, besonders für thermisch stark beanspruchte Bereiche, Strukturbauteile, beispielsweise Karosserie-Außenteile im Fahrzeugbau, wie Kotflügel, Bootsrümpfe, Heißwasserbehälter, beispielsweise im Haushalt, als Teile von Elektromotoren, Masten, beispielsweise als Strommasten oder Telegraphenmasten, Isolatoren und andere Bauteile im Bereich Hochspannungstechnik, Rotorblätter für Windkraftanlagen oder als Rohre, beispielsweise faserverstärkte Pipelines für die Öl und Gasindustrie, eingesetzt werden. Weiter eignen sich die erfindungsgemäßen Polyurethanmaterialien zur Verwendung in der kathodischen Tauchlackierung die insbesondere in der Automobilindustrie eingesetzt wird.

Die Erfindung soll im Folgenden anhand von Beispielen verdeutlicht werden.

Einsatzstoffe:
- Polyol 1:: Rizinusöl
- Polyol 2:: Glyceringestartetes Polypropylenoxid mit einer Funktionalität von 3,0 und einer OH-Zahl von 805 mg KOH/g
- Polyol 3:: Saccharose und Diethylenglycol cogestartetes Polypropylenoxid/Polyethylenoxid mit Propylenoxid-cap mit einer Funktionalität von 4,5 und einer OH-Zahl von 400 mg KOH/g
- TMPTA:: Trimethylolpropantriacrylat, Doppelbindungsdichte 26,35
- Polyol 5:: Dipropylenglycol
- DPGDA:: Dipropylenglycoldiacrylat, Doppelbindungsdichte 21,5
- Iso 1:: polymer-MDI

Gemäß Tabelle 1 wurden bei einem Isocyanatindex von 120 Prüfplatten mit einer Dicke von 2 mm gegossen. Alle Angaben entsprechen Gewichtsteilen falls nicht anders angegeben. Anschließend wurde von den Proben die Glastemperatur mittels DSC bestimmt. Dazu wurde die Probe in zwei Heizläufen jeweils von Raumtemperatur auf 300 °C aufgeheizt, die Heizrate betrug 20 K/min. Die Glastemperatur wurde aus den Daten des zweiten Heizlaufes bestimmt.

**Tabelle 1**

| | | | |
|---|---|---|---|
| Polyol 1 | 44,8 | 26,7 | 26,7 |
| Polyol 2 | 25 | 15 | 15 |
| Polyol 3 | 25 | 15 | 15 |
| Trockenmittel | 5 | 3 | 3 |
| Entschäumer | 0,2 | 0,2 | 0,2 |
| TMPTA | | 40 | |
| DPGDA | | | 40 |
| Iso | | | |
| Iso 1 | 100 | 100 | 100 |
| | | | |
| Tg in °C; DSC 2. Heizlauf | 95 | 179 | 123 |
| Wärmeformbeständigkeit 0,45MPa in °C (gemäß DIN EN ISO 75-1) | 70 | 150 | nicht gemessen |

Die erfindungsgemäßen Polyurethane zeigen eine deutlich erhöhte Glastemperatur und verbesserte Wärmeformbeständigkeit des erfindungsgemäßen Polyurethanmaterials gegenüber dem Vergleichsmaterial ohne Verbindung mit Kohlenstoff-Kohlenstoff-Doppelbindung. Weiter zeigt die Tabelle, dass eine hohe Doppelbindungsdichte gegenüber DPGDA zu deutlich erhöhten Glastemperaturen führt.

## Patentansprüche

1. Verfahren zur Herstellung eines Polyurethanmaterials, bei dem man
a) Di- und/oder Polyisocyanate,
b) Verbindungen mit gegenüber Isocyanatgruppen reaktiven Wasserstoffatomen,
c) Verbindungen, enthaltend mindestens eine Kohlenstoff-Kohlenstoff-Doppelbindung,
d) gegebenenfalls die Urethanreaktion beschleunigender Katalysator,
e) gegebenenfalls Radikalstarter und
f) gegebenenfalls weitere Hilfs- und Zusatzstoffe,
zu einer Reaktionsmischung vermischt und aushärtet, wobei
als Verbindungen mit gegenüber Isocyanat reaktiven Wasserstoffatomen Verbindungen eingesetzt werden, die eine mittlere Funktionalität von mindestens 1,5 aufweisen,
die Doppelbindungsdichte der Verbindung (c) mindestens 21 % beträgt und die Doppelbindungsfunktionalität der Verbindung (c) größer als 1 ist und die Verbindung (c) keine gegenüber Isocyanat reaktive Gruppen aufweist und neben Verbindungen der Komponente (b) keine weiteren Verbindungen mit gegenüber Isocyanat reaktiven Wasserstoffatomen eingesetzt werden und
das Äquivalenzverhältnis von Isocyanatgruppen der Di- und/oder Polyisocyanate (a) und der gegenüber Isocyanat reaktiven Wasserstoffatome 0,8 bis 2 beträgt.

2. Verfahren nach Anspruch 1, **dadurch gekennzeichnet, dass** die Verbindung (c) mindestens eine endständige Kohlenstoff-Kohlenstoff-Doppelbindung aufweist.

3. Verfahren nach Anspruch 1 oder 2, **dadurch gekennzeichnet, dass** die Verbindungen mit gegenüber Isocyanatgruppen reaktiven Wasserstoffatomen polymere Verbindungen mit gegenüber Isocyanat reaktiven Wasserstoffatomen und gegebenenfalls Kettenverlängerer und/oder Vernetzungsmittel aufweist, wobei polymere Verbindungen mit gegenüber Isocyanat reaktiven Wasserstoffatomen ein Molekulargewicht von 300 g/ mol und größer aufweisen und die Kettenverlängerer und Vernetzungsmittel ein Molekulargewicht von kleiner als 300 g/mol aufweisen.

4. Verfahren nach Anspruch 3, **dadurch gekennzeichnet, dass** polymere Verbindungen mit gegenüber Isocyanat reaktiven Wasserstoffatomen eine mittlere Wasserstoff-Funktionalität von 2 bis 4 und einem Gehalt an sekundären OH-Gruppen vom mindestens 50 % aufweisen.

5. Verfahren nach einem der Ansprüche 1 bis 4, **dadurch gekennzeichnet, dass** die polymeren Verbindungen mit gegenüber Isocyanat reaktiven Wasserstoffatomen mindestens eine hydroxyfunktionelle Verbindung mit hydrophoben Gruppen enthält.

6. Verfahren nach einem der Ansprüche 1 bis 5, **dadurch gekennzeichnet, dass** als Di- oder Polyisocyanate (a) 2,4'-MDi, 4,4'-MDI, höherkernige Homologe des MDI oder Mischungen aus zwei oder mehreren dieser Komponenten eingesetzt werden.

7. Verfahren nach einem der Ansprüche 1 bis 6, **dadurch gekennzeichnet, dass** das Polyurethanmaterial in einem Schritt erhalten wird.

8. Verfahren nach einem der Ansprüche 1 bis 7, **dadurch gekennzeichnet, dass** der Anteil der Verbindungen, enthaltend mindestens eine Kohlenstoff-Kohlenstoff-Doppelbindung (c), 10 bis 70 Gew.-%, bezogen auf das Gesamtgewicht der Komponenten (a) bis (f), beträgt.

9. Verfahren nach einem der Ansprüche 1 bis 8, **dadurch gekennzeichnet, dass** die Verbindungen (c), enthaltend mindestens eine Kohlenstoff-Kohlenstoff-Doppelbindung, während der Polyurethanreaktion der Komponenten (a) und (b) oder in einem an die Polyurethanreaktion anschließenden Schritt radikalisch polymerisiert werden.

10. Verfahren nach Anspruch 9, **dadurch gekennzeichnet, dass** die radikalische Polymerisation der Verbindungen, enthaltend mindestens eine Kohlenstoff-Kohlenstoff-Doppelbindung (c) durch Radikalstarter, Bestrahlung mit energiereicher Strahlung oder thermisch bei Temperaturen von größer 150 °C initiiert wird.

11. Verfahren nach einem der Ansprüche 1 bis 10, **dadurch gekennzeichnet, dass** das Polyurethanmaterial ein Polyurethan Faserverbundmaterial ist und man ein Fasermaterial mit der Reaktionsmischung benetzt und anschließend zum Polyurethan-Faserverbundmaterial aushärtet.

12. Polyurethanmaterial erhältlich nach einem Verfahren gemäß einem der Ansprüche 1 bis 11.

13. Verwendung eines Polyurethanmaterials nach Anspruch 12 als Strukturbauteil.

14. Verwendung eines Polyurethanmaterials nach Anspruch 12 als Klebstoff.

## Claims

1. A process for preparing a polyurethane material, said process comprising
a) di- and/or polyisocyanates,
b) compounds having isocyanate-reactive hydrogen atoms,
c) compounds comprising at least one carbon-carbon double bond,
d) optionally a catalyst to hasten the urethane reaction,
e) optionally a free-radical initiator, and
f) optionally further auxiliary and addedsubstance materials,
being mixed into a reaction mixture and cured, wherein
the compounds having isocyanate-reactive hydrogen atoms contain on average not less than 1.5 isocyanate-reactive hydrogen groups per molecule,
the double bond density of compound (c) is not less than 21% and the double bond functionality of compound (c) is greater than 1 and said compound (c) has no isocyanate-reactive groups and compounds of component (b) aside no further compounds having isocyanate-reactive hydrogen atoms are used, and
the equivalence ratio between the isocyanate groups of di- and/or polyisocyanates (a) and the isocyanate-reactive hydrogen atoms is in the range from 0.8 to 2.

2. The process according to claim 1, wherein said compound (c) has at least one terminal carbon-carbon double bond.

3. The process according to claim 1 or 2, wherein the compounds having isocyanate-reactive hydrogen atoms comprise polymeric compounds having isocyanate-reactive hydrogen atoms and optionally chain extenders and/or crosslinking agents, wherein polymeric compounds having isocyanate-reactive hydrogen atoms have a molecular weight of 300 g/mol or above and the chain extenders and crosslinking agents have a molecular weight of less than 300 g/mol.

4. The process according to claim 3, wherein polymeric compounds having isocyanate-reactive hydrogen atoms have an average hydrogen functionality of 2 to 4 and a secondary OH group content of not less than 50%.

5. The process according to any of claims 1 to 4, wherein the polymeric compounds having isocyanate-reactive hydrogen atoms comprise at least one hydroxyl-functional compound having hydrophobic groups.

6. The process according to any of claims 1 to 5, wherein said di- or polyisocyanates (a) comprise 2,4'-MDi, 4,4'-MDI, higher-nuclear homologs of MDI or mixtures of two or more thereof.

7. The process according to any of claims 1 to 6, wherein the polyurethane material is obtained in one step.

8. The process according to any of claims 1 to 7, wherein the proportion of compounds comprising at least one carbon-carbon double bond (c) is in the range from 10 to 70 wt%, based on the combined weight of components (a) to (f).

9. The process according to any of claims 1 to 8, wherein said compounds (c), comprising at least one carbon-carbon double bond, are free-radically polymerized during the polyurethane reaction of components (a) and (b) or in a step subsequent to the polyurethane reaction.

10. The process according to claim 9, wherein the free-radical polymerization of compounds comprising at least one carbon-carbon double bond (c) is initiated via free-radical initiator, irradiation with highenergy radiation or thermally at temperatures above 150°C.

11. The process according to any of claims 1 to 10, wherein the polyurethane material is a polyurethane-type fiber composite material and a fiber material is wetted with the reaction mixture and then cured to form the polyurethane-type fiber composite material.

12. A polyurethane material obtainable by a process according to any of claims 1 to 11.

13. Use of a polyurethane material according to claim 12 as a structural component part.

14. Use of a polyurethane material according to claim 12 as an adhesive.

## Revendications

1. Procédé pour la préparation d'un matériau de polyuréthane, dans lequel on mélange en un mélange réactionnel et on durcit
a) des diisocyanates et/ou des polyisocyanates,
b) des composés dotés d'atomes d'hydrogène réactifs vis-à-vis des groupes isocyanate,
c) des composés contenant au moins une double liaison carbone-carbone,
d) éventuellement un catalyseur accélérant la réaction de formation d'uréthane,
e) éventuellement un initiateur de radicaux et
f) éventuellement d'autres auxiliaires et additifs,
des composés présentant une fonctionnalité moyenne d'au moins 1,5 étant utilisés en tant que composés dotés d'atomes d'hydrogène réactifs vis-à-vis d'un isocyanate,
la densité de doubles liaisons du composé (c) étant d'au moins 21 % et la fonctionnalité de doubles liaisons du composé (c) étant supérieure à 1 et le composé (c) ne présentant aucun groupe réactif vis-à-vis d'un isocyanate et outre des composés du composant (b), aucun autre composé doté d'atomes d'hydrogène réactifs vis-à-vis d'un isocyanate n'étant utilisé et
le rapport d'équivalence de groupes isocyanate des diisocyanates et/ou polyisocyanates (a) et des atomes d'hydrogène réactifs vis-à-vis d'un isocyanate étant 0,8 à 2.

2. Procédé selon la revendication 1, **caractérisé en ce que** le composé (c) présente au moins une double liaison carbone-carbone terminale.

3. Procédé selon la revendication 1 ou 2, **caractérisé en ce que** les composés dotés d'atomes d'hydrogène réactifs vis-à-vis des groupes isocyanate présentent des composés polymériques dotés d'atomes d'hydrogène réactifs vis-à-vis d'un isocyanate et éventuellement des extenseurs de chaînes et/ou des agents de réticulation, des composés polymériques dotés d'atomes d'hydrogène réactifs vis-à-vis d'un isocyanate présentant un poids moléculaire de 300 g/mole et plus et les extenseurs de chaînes et agents de réticulation présentant un poids moléculaire inférieur à 300 g/mole.

4. Procédé selon la revendication 3, **caractérisé en ce que** des composés polymériques dotés d'atomes d'hydrogène réactifs vis-à-vis d'un isocyanate présentent une fonctionnalité moyenne d'hydrogène de 2 à 4 et une teneur en groupes OH secondaires d'au moins 50 %.

5. Procédé selon l'une quelconque des revendications 1 à 4, **caractérisé en ce que** les composés polymériques dotés d'atomes d'hydrogène réactifs vis-à-vis d'un isocyanate contiennent au moins un composé fonctionnalisé par hydroxy comportant des groupes hydrophobes.

6. Procédé selon l'une quelconque des revendications 1 à 5, **caractérisé en ce que** le 2,4'-MDI, le 4,4'-MDI, des homologues à nombre de noyaux plus élevé du MDI ou des mélanges de deux ou plus de ces composants sont utilisés en tant que diisocyanates ou polyisocyanates (a).

7. Procédé selon l'une quelconque des revendications 1 à 6, **caractérisé en ce que** le matériau de polyuréthane est obtenu en une étape.

8. Procédé selon l'une quelconque des revendications 1 à 7, **caractérisé en ce que** la proportion de composés contenant au moins une double liaison carbone-carbone (c) est de 10 à 70 % en poids, par rapport au poids total des composants (a) à (f).

9. Procédé selon l'une quelconque des revendications 1 à 8, **caractérisé en ce que** les composés (c) contenant au moins une double liaison carbone-carbone sont polymérisés de manière radicalaire pendant la réaction de formation de polyuréthane des composants (a) et (b) ou dans une étape consécutive à la réaction de formation de polyuréthane.

10. Procédé selon la revendication 9, **caractérisé en ce que** la polymérisation radicalaire des composés contenant au moins une double liaison carbone-carbone (c) est initiée par un initiateur de radicaux, une irradiation avec un rayonnement riche en énergie ou thermiquement à des températures supérieures à 150 °C.

11. Procédé selon l'une quelconque des revendications 1 à 10, **caractérisé en ce que** le matériau de polyuréthane est un matériau composite fibreux de polyuréthane et que l'on mouille un matériau fibreux avec le mélange réactionnel et on durcit par la suite pour donner le matériau composite fibreux de polyuréthane.

12. Matériau de polyuréthane pouvant être obtenu par un procédé selon l'une quelconque des revendications 1 à 11.

13. Utilisation d'un matériau de polyuréthane selon la revendication 12 en tant que composant de structure.

14. Utilisation d'un matériau de polyuréthane selon la revendication 12 en tant qu'adhésif.
